# EUROPÄISCHE PATENTSCHRIFT

(11) **EP 2 535 213 B1**
(45) Veröffentlichungstag und Bekanntmachung des Hinweises auf die Patenterteilung: **19.06.2013**
(21) Anmeldenummer: 12169959.9
(22) Anmeldetag: 30.05.2012
(51) Int. Cl.: B60G 7/00, B60G 9/00, B60B 35/00, B62D 29/00, B62D 21/00

(54) **Kraftfahrzeug-Fahrwerkskomponente**
Motor vehicle undercarriage component
Composants de châssis de véhicule automobile

(30) Priorität: 16.06.2011 DE 102011051115
(43) Veröffentlichungstag der Anmeldung: 19.12.2012
(73) Patentinhaber: Benteler Automobiltechnik GmbH, 33102 Paderborn (DE)
(72) Erfinder: Neumann, Hans-Jürgen, 33699 Bielefeld (DE); Horenkamp, Hans-Joachim, 33175 Bad Lippspringe (DE); Meyer, Stephan, 33605 Bielefeld (DE); Linnig, Wolfram, 33100 Paderborn (DE)
(74) Vertreter: Griepenstroh, Jörg

(56) Entgegenhaltungen:
- EP-A2- 1 084 816
- WO-A1-03/039893
- DE-A1- 10 155 490
- DE-A1- 19 946 349
- DE-A1-102006 036 931
- DE-B4- 10 017 205

## Beschreibung

Die Erfindung betrifft eine Fahrwerkskomponente für ein Kraftfahrzeug gemäß den Merkmalen im Oberbegriff von Anspruch 1.

Konstruktive, technologische und werkstoffliche Leichtbaulösungen zur Gewichtsreduzierung von Kraftfahrzeug-Fahrwerkskomponenten gewinnen zur Kraftstoff- und Emissionsreduzierung zunehmend an Bedeutung. Eine besondere Rolle kommt dabei Leichtbauwerkstoffen wie Aluminium zu, um insbesondere die sogenannten ungefederten Massen im Fahrwerksbereich zu reduzieren. Dieser Trend wird noch dadurch beschleunigt, dass abgasarme bzw. abgasfreie Fahrzeuge mit Hybrid- bzw. Elektroantrieb für die erforderlichen Elektrokomponenten Mehrgewichte von ca. 130 kg erfordern, die durch größere Gewichtsreduzierungen bei anderen Komponenten kompensiert werden müssen. Um bei möglichst geringer Eigenmasse die erforderlichen hohen Festigkeits- und Steifigkeitseigenschaften bei hochbeanspruchten Fahrwerkskomponenten, wie Schwenklager, Trag-, Führungs-, Dreieckslenker usw., zu gewährleisten, erlangen aus Aluminium geschmiedete Fahrwerkskomponenten mit Streckgrenzen Rp0,2 über 300 MPa und Bruchdehnungen A5 über 10% zunehmende Marktnachfrage. Neben der Streckgrenze als Auslegungskriterium werden Fahrwerkskomponenten auch auf Steifigkeit ausgelegt, um definierte Knicklasten in besonderen Last- und Crashfällen zu ertragen. Maßgeblich für die Steifigkeit ist neben der Querschnittsgestaltung das E-Modul des eingesetzten Werkstoffes. Dieses ist bei Aluminium mit ca. 70.000 kN/mm² dreimal kleiner als bei Stahl. Dadurch tritt an steifigkeitskritischen Bauteilbereichen die unerwünschte Situation ein, dass die bei Schmiedeteilen üblichen massiven Querschnitte erhöht werden müssen, um die geforderten Steifigkeiten zu erreichen, was zu zusätzlicher Masse und damit erhöhtem Gewicht führt. Angesichts zunehmend kompakter Fahrzeugbauweise auch im Bereich des Fahrwerks ist es inzwischen der Regelfall, dass aufgrund von Bauraumrestriktionen die Bauteilquerschnitte nicht beliebig erhöht werden können, um die erforderlichen Werte für die steifigkeitsrelevanten Widerstandsmomente der Bauteilquerschnitte, z.B. durch leichtbaugerechte Hohlprofile größerer Durchmesser anstatt massiver Querschnitte, zu erreichen.

Da das steifigkeitsrelevante E-Modul bei Leichtmetallwerkstoffen, wie Aluminium und auch bei anderen Werkstoffen nur in sehr engen Grenzen zu beeinflussen ist, beinhalten bekannte Lösungen den Verbund mit Werkstoffen, die über ein höheres E-Modul verfügen. So ist es beispielsweise bekannt, auf steifigkeitsrelevanten Bereiche von Aluminium-Schmiedeteilen Stahlauflagen verschiedener geometrischer Formen und Dicke aufzuschmieden, deren E-Modul ca. 210.000 kN/mm² beträgt. Problematisch hier sind allerdings die galvanische Korrosionsanfälligkeit zwischen den galvanisch relevanten Berührungsbereichen zwischen Aluminiumgrundmaterial und der Stahlauflage sowie der Korrosion der Stahloberfläche selbst. Dies gilt insbesondere unter dem Aspekt, dass solche Aluminium-Schmiedeteile aus Kostengründen nicht mit einer zusätzlichen Korrosionsschutzschicht versehen werden.

Bekannt sind auch zahlreiche Anwendungen verschiedener Typen von Verbundwerkstoffen, z.B. Schichten-, Teilchen,- Faserverbundwerkstoffe usw., in Schiff, Flugzeugbau usw., bei denen unterschiedliche Werkstoffe geschichtet werden. Diese Technologien kommen für die vorliegenden kompakten und hochbelasteten Bauteile aus Kostengründen nur in Ausnahmefällen in Betracht. Ein weiterer bekannter Ansatz besteht in der Verwendung von Metall-Matrix-Verbundwerkstoffen (engl.: metall matrix composites MMC), bei denen erhöhte E-Module durch Einlagerung von keramischen Fasern in die Aluminium-Matrix erzielt werden. Diese Technologie ist jedoch aufgrund der hohen Fertigungskosten für diese MMC's auf Sonderfälle bzw. -einsätze beschränkt. Insbesondere aus dem Formel 1-Motorsport sind auch CFK-Komplettlösungen bekannt, die jedoch ebenfalls aufgrund der hohen Kosten sowie des relativ spröden und verformungsarmen Bruchverhaltens nicht für eine Anwendung im konventionellen Automobilbereich eingesetzt werden.

Durch die DE 100 17 205 B4 zählt ein Karosserie- oder Fahrwerksbauteil zum Stand der Technik mit zumindest einer partiellen Carbonfaser-Verstärkung, wobei die Carbonfaser-Verstärkung aus mittels Ultraschallschweißen in das Bauteil eingearbeiteten Carbonfasern besteht.

Die EP 1 084 816 A2 offenbart ein Verbundbauteil aus einem mit einer Verrippung versehenen Grundkörper, der partiell oder vollständig mit einem Verstärkungselement aus Metall oder verstärktem Kunststoff verbunden wird. Der Kontakt zwischen dem Grundkörper und dem Verstärkungselement kann durch eine vollflächige stoffschlüssige Verklebung oder Verschweißung erfolgen.

Bei dem aus der DE 10 2005 004 917 A1 bekannten Lenkerbauteil für Radaufhängungen von Kraftfahrzeugen ist ein Schalenkörper aus einem Stahlwerkstoff in einem Blechumformverfahren hergestellt. Der Schalenkörper weist mehrere, von einem Mittelsteg in die gleiche Richtung ausgestellte Flankenbereiche auf. Die Flankenbereiche sind über Gitteraussteifungen aus Kunststoff miteinander verbunden.

Weiterhin ist aus der DE 101 55 490 A1 eine Kraftverbindungsstrebe bekannt mit einem Grundkörper, der aus mehreren Elementen aus Kunststoff und Metall zusammengesetzt ist, wobei die Verbindung zwischen Metallelementen und Kunststoffelementen durch eine Umformung eines Teils der Kunststoffelemente bewirkt wird.

Der Erfindung liegt ausgehend vom Stand der Technik die Aufgabe zugrunde, eine belastungstechnisch effizientere und leichter bauende Fahrwerkskomponente mit verbessertem Crashverhalten aufzuzeigen.

Die Lösung dieser Aufgabe besteht nach der Erfindung in einer Fahrwerkskomponente gemäß den Merkmalen von Anspruch 1.

Vorteilhafte Ausgestaltung und Weiterbildung des grundsätzlichen Erfindungsgedankens sind Gegenstand der abhängigen Ansprüche 2 bis 9.

Erfindungsgemäß besteht die Fahrwerkskomponente aus einem geschmiedeten Basiskörper aus einem Leichtmetallwerkstoff, der mit einem Verstärkungskörper aus einem Faserwerkstoff zumindest partiell verstärkt ist. Der Basiskörper und der Verstärkungskörper sind kraft- und formschlüssig miteinander verbunden. Die kraftschlüssige Verbindung ist eine Klebeverbindung mittels einer Klebstoffschicht zwischen Basiskörper und Verstärkungskörper. Die formschlüssige Verbindung erfolgt über eine plastische Verformung von Bereichen des Basiskörpers, so dass diese den Verstärkungskörper partiell umgreifen.

Insbesondere ist der Verstärkungskörper in einem steifigkeitsrelevanten Abschnitt der Fahrwerkskomponente bzw. des Basiskörpers angeordnet. Vorzugsweise ist die Klebstoffschicht vollflächig zwischen dem Basiskörper und dem Verstärkungskörper vorgesehen. Der Verstärkungskörper besteht insbesondere aus einem kohlenstofffaserverstärkten Kunststoff (CFK). Die Klebstoffschicht besteht bevorzugt aus einem Klebstoff auf Epoxidharzbasis. Das Verhältnis des Elastizitätsmoduls des Werkstoffs des Basiskörpers und dem Werkstoff des Verstärkungskörpers ist zwischen 1 : 3 und 1 : 7 bemessen.

Der oder die plastisch verformten Bereiche des Basiskörpers bilden Verbindungselemente zwischen den Bauteilen und können sich randseitig des Verstärkungskörpers erstrecken. Die plastisch verformten Bereiche sind dann insbesondere nach Art einer Falzung oder einer Umstellung ausgeführt. Möglich ist auch, dass sich Bereiche des Basiskörpers durch Ausnehmungen im Verstärkungskörper erstrecken und plastisch verformt sind. Derartige Verbindungselemente sind dann nach Art eines Niets ausgestaltet, wobei der plastisch verformte Bereich einen Schließkopf bildet.

Die Erfindung schafft eine Lösung, die es ermöglicht an einer Fahrwerkskomponente die erforderlichen Steifigkeiten und Knicklasten in definierten Bauteilabschnitten unter gegebenen Bauraumrestriktionen zu realisieren und kommt hierbei ohne die bisher übliche Materialaufdickung zur Erhöhung der Widerstandmomente steifigkeitsrelevanter Bauteilabschnitte aus. Die erfindungsgemäße Fahrwerkskomponente weist einerseits im Normalbetrieb unter den verschiedensten Belastungsfällen nur geringe elastische Verformungen auf, andererseits in Missbrauchs- oder Crashfällen aber eine hohe plastische Verformbarkeit, um Energie durch Verformung zu absorbieren und gleichzeitig funktionelle Verbindungen zwischen einzelnen Fahrwerkskomponenten kontrolliert bis zu einem definierten Bruch zu erhalten. Die Fahrwerkskomponenten werden durch die konfigurative Auslegung und das Zusammenwirken von Basiskörper und Verstärkungskörper so konzipiert, dass sich bei überschreiten der Bruchlast keine Teile vom Fahrzeug als gefährliche, unkontrolliert umherfliegende Einzelteile infolge eines unkontrollierten, verformungsarmen Bruchs lösen. Diese Anforderung wird auch als "fail safe behavior" entsprechend "Sicheres Ausfallverhalten" bezeichnet.

Eine für die Praxis besonders vorteilhafte Ausgestaltung der erfindungsgemäßen Fahrwerkskomponente besteht darin, dass vorgeformte Verstärkungskörper, vorzugsweise Carbonschalen (CFK-Schalen), ausgelegt auf hohes Elastizitätsmodul, z.B. bis 380.000 MPa, also bis zu 5mal höher als Aluminium mit ca. 70.000 kN/mm², form- und kraftschlüssig auf entsprechend ausgelegte Bereiche der geschmiedeten Basiskörper mit partiell hohen Steifigkeitsanforderungen dauerfest aufgebracht sind. Die dauerfeste Verbindung beinhaltet eine Kombination aus kraftschlüssiger Verbindung durch Klebstoff, vorzugsweise einem Klebstoff aus Epoxidharzbasis, und einer formschlüssigen Verbindung durch vollständiges oder teilweises Einfalzen der Ränder des Verstärkungskörpers und/oder zusätzliches punktförmiges oder linienförmiges plastisches Verformen, beispielsweise Vernieten bzw. Verprägen bestimmter Bereiche des Basiskörpers mit dem Verstärkungskörper. Aus dem Werkstoff des Basiskörpers werden so durch die plastische Verformung partieller Bereiche des Basiskörpers Verbindungselemente herausgebildet, die den Verstärkungskörper formschlüssig um- bzw. übergreifen. Der Klebstoff für die kraftschlüssige Verbindung, der in einer bestimmten Dicke flächig entweder auf die Fügeseite des Verstärkungskörpers oder die Fügeseite des Leichmetall-Basiskörpers aufgetragen wird, dient gleichzeitig als Ausgleichsmedium für Unebenheiten auf den Oberflächen beider Fügeteile. Auf diese Weise wird ein vollständig flächiger kraftschlüssiger Klebekontakt zwischen Verstärkungskörper und Basiskörper gewährleistet. Für die Einfalzung bzw. Verprägung der Verstärkungskörper auf dem Basiskörper werden am Basiskörper entsprechende durchgängige oder unterbrochene Falze sowie linienartige Erhebungen, wie Stege oder punktuelle Erhebungen, wie Noppen ausgeschmiedet. Die CFK-Schale wird nach dem Klebstoffauftrag im Rahmen der Falze und/oder mit den angepassten Ausnehmungen über die durchgängigen oder unterbrochenen Stege und /oder über die Noppen auf der Schmiedeoberfläche auf den Basiskörper aufgelegt und stabil fixiert. Falze, Stege und Noppen am Schmiedeteil sowie entsprechende Ausnehmungen an der CFK-Schale dienen gleichzeitig als exakte Führungs- und Positionierungshilfen für die CFK-Schale auf dem Basiskörper. In einem weiteren Arbeitsgang werden die Falze, Stege und Noppen mit einem entsprechen Werkzeug eingeformt, die Falze umgebogen und die Noppen breitgedrückt bzw. je nach Ausführung breitgenietet bzw. gestaucht, so dass die CFK-Schale insgesamt auf der Oberfläche des Basiskörpers flächig kraftschlüssig durch die Klebstoffschicht aufgepresst und durch die plastisch verbundenen Verbindungselemente in Form der Falze und Vernietungen formschlüssig verbunden wird. Da die CFK-Schale auf den steifigkeitsrelevanten Oberflächenbereichen des Basiskörpers aufgebracht wird, also mit maximalem Abstand von den neutralen Linien, können entsprechend der physikalischen Abhängigkeit der steifigkeitsrelevanten Querschnittsträgheitsmomente vom Radius zur neutralen Linie in 3. Potenz maximale Steifigkeitseffekte mit minimalem CFK-Materialeinsatz, z.B. mit minimaler Materialdicke und entsprechender Gewichtsreduzierung erreicht werden. Diese erfinderische Lösung kann insofern erweitert werden, dass z.B. bei den in großen Stückzahlen verwendeten Zweipunkt- oder Stablenkern nicht nur eine bereichsweise CFK-Versteifung erfolgt, sondern in Form einer CFK-Halbschale realisiert wird. Dabei ist eine Hälfte des Basiskörpers als typisches Schmiedeteil mit zwei Durchzügen und die andere Hälfte eine CFK-Hälfte oder CFK-Halbschale, die wie die Leichtmetall-Schmiedehälfte ebenfalls mit Durchzügen für die Aufnahme von beispielsweise Gummilager versehen ist. Der Basiskörper und der Versteifungskörper weisen mithin zueinander korrespondierende Öffnungen auf. Die Trennebene der Schmiedehälfte für die Aufnahme der CFK-Hälfte als CFK-Versteifung ist je nach technischem Bedarf mit den beschriebenen erfindungsgemäßen form- und kraftschlüssigen Verbindungselementen versehen.

Die erfindungsgemäße Lösung hat gegenüber dem Stande der Technik, bei dem bereichsweise erforderliche höhere Steifigkeiten im Prinzip nur durch Querschnittserhöhungen per Materialaufdickungen, d.h. letztlich durch Gewichtserhöhungen erreicht werden können, den Vorteil, dass durch die erfindungsgemäßen Verbund von duktilem Leichtmetall-, insbesondere Aluminiumwerkstoff mit hochsteifen CFK-Werkstoff mittels der erfindungsgemäßen Verbindungselemente die an diese Bauteile gestellten widersprüchlichen Anforderungen mit reduziertem Gewicht erfüllt werden können, nämlich dass das Bauteil im Normalbetrieb unter den verschiedensten Belastungsfällen einerseits nur möglichst geringe elastische Verformungen aufweisen soll, in Missbrauchs- und Crashfällen aber andererseits eine hohe plastische Verformbarkeit, um Energie durch Verformung zu absorbieren und gleichzeitig funktionelle Verbindungen zwischen einzelnen Fahrwerkskomponenten kontrolliert bis zu einem definierten Bruch zu erhalten. Die zusätzlichen Steifigkeitsfunktionen werden von den bereichsweisen oder halbschalenartigen Verstärkungskörpern, insbesondere CFK-Versteifungen, übernommen, während der geschmiedete Basiskörper als Tragelement den Verstärkungskörper in den dauerfesten form- und kraftschlüssigen erfindungsgemäßen Verbindungsvarianten aufnimmt und im Mißbrauchs- oder Crashfall die plastische Verformung und Energieabsorption funktionell realisiert. Es versteht sich, dass an einem Basiskörper ein oder mehrere Verstärkungskörper vorgesehen sein können. Werkstoffauswahl, geometrische Anordnung und Fügung von Basiskörper und dem bzw. den Verstärkungskörpern werden entsprechend dem angestrebten Belastungsverhalten konzipiert. Mit minimiertem Gewicht im dauerfesten Werkstoffverbund können die gesetzten Anforderungen hinsichtlich des "fail safe behavior" bzw. "Sicheres Ausfallverhalten" erfüllt werden.

Die Erfindung ist nachfolgend anhand von in den Zeichnungen dargestellten Ausführungsbeispielen näher beschrieben. Es zeigen:
- Figur 1: in technisch schematisierter Darstellungsweise eine erfindungsgemäß ausgestaltete Fahrwerkskomponente in Form eines Schwenklagers;
- Figur 2: einen Schnitt durch die Darstellung der Figur 1 entlang der Linie A-A;
- Figur 3: ebenfalls in technisch schematisierter Darstellungsweise einen Längsschnitt durch eine erfindungsgemäß ausgestaltete Fahrwerkskomponente in Form eines Führungslenkers und
- Figur 4: einen Schnitt durch die Darstellung der Figur 3 entlang der Linie B-B.

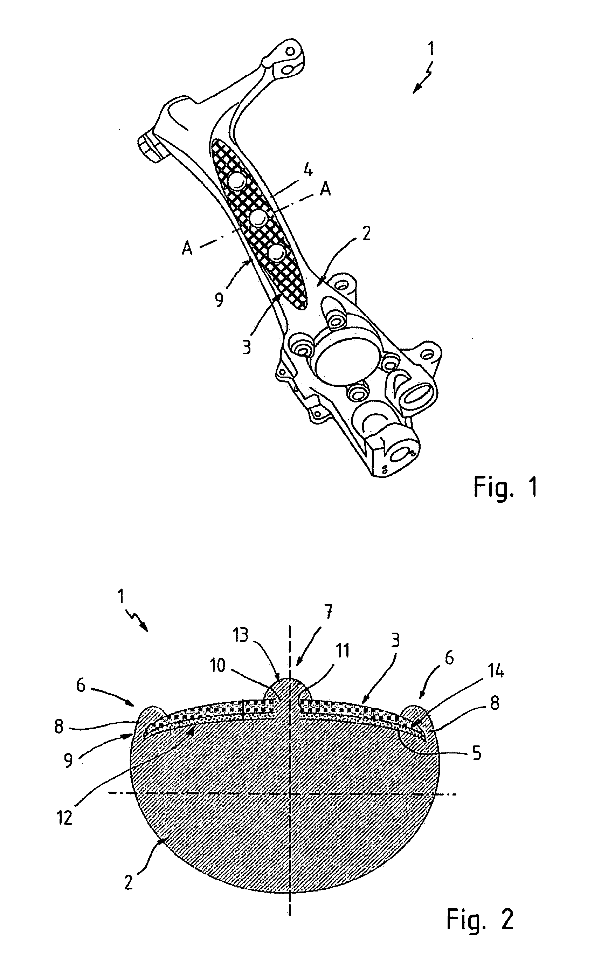

In den Figuren 1 und 2 ist eine erfindungsgemäße Fahrwerkskomponente 1 in Form eines Schwenklagers dargestellt.

Die Fahrwerkskomponente 1 weist einen geschmiedeten Basiskörper 2 aus Aluminium bzw. einer Aluminiumlegierung auf, der mit einem schalenartigen Verstärkungskörper 3 aus kohlenstofffaserverstärktem Kunststoff gefügt ist. Der Verstärkungskörper 3 ist in einem spannungsrelevanten Schenkelabschnitt 4 der Fahrwerkskomponente 1 angeordnet. Der Basiskörper 2 und der Verstärkungskörper 3 sind kraft- und formschlüssig miteinander verbunden. Die kraftschlüssige Verbindung ist durch eine Klebstoffschicht 5 zwischen Basiskörper 2 und Verstärkungskörper 3 gebildet. Die formschlüssige Verbindung erfolgt über eine plastische Verformung von Bereichen 6, 7 des Basiskörpers 2, so dass diese den Verstärkungskörper 3 partiell umgreifen.

Die Klebstoffschicht 5 besteht aus einem Klebstoff auf Epoxidharzbasis und ist vollflächig zwischen dem Basiskörper 2 und dem Verstärkungskörper 3 vorgesehen. Die Klebstoffschicht 5 dient auch als Ausgleich für Unebenheiten auf den Fügeflächen zwischen Basiskörper 2 und Verstärkungskörper 3.

Die formschlüssige Verbindung zwischen Basiskörper 2 und Verstärkungskörper 3 erfolgt durch plastische Verformung der Bereiche 6 und 7 des Basiskörpers 2. Diese Bereiche 6, 7 sind bei der schmiedetechnischen Herstellung des Basiskörpers 2 als Stege 8 am Rand 9 des Basiskörpers 2 und als Noppen 10 im Schenkelabschnitt 4 ausgebildet. Im Verstärkungskörper 3 ist eine Ausnehmung 11 nach Art eines Nietlochs vorgesehen. Der Verstärkungskörper 3 wird unter Eingliederung der Klebstoffschicht 5 auf den Aufnahmebereich 12 des Basiskörpers 2 aufgelegt. Hierbei wird der Verstärkungskörper 2 mit der Ausnehmung 11 über den Noppen 10 gesetzt und zwischen den Stegen 8 positioniert. Anschließend erfolgt die plastische Verformung der Stege 8 und der Noppen 10. Hierbei werden die randseitigen Stege 9 eingefalzt und die Enden 13 der Noppen 10 breit gedrückt bzw. gestaucht. Beim Verformungsvorgang wird die Ausnehmung 11 vom Material des Noppens 10 ausgefüllt. Die plastisch verformten Bereiche 6 umgreifen den Rand 14 des Verstärkungskörpers 3. Die plastisch verformten Bereiche 7 bilden einen Schließkopf und umgreifen den Verstärkungskörper 3 um die Ausnehmung 11. Der Basiskörper 2 und der Verstärkungskörper 3 sind dann kraft- und formschlüssig verbunden.

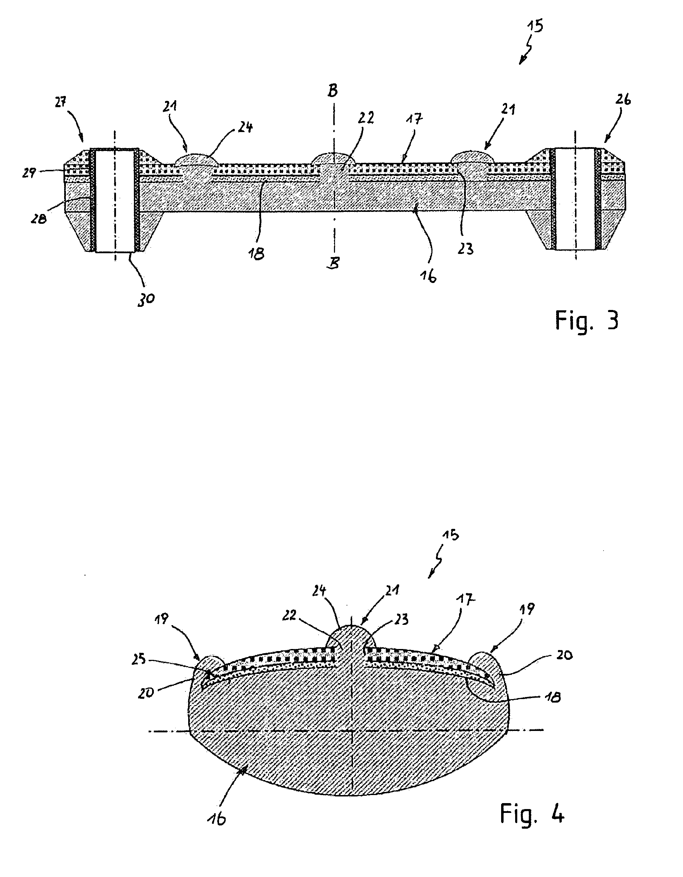

Die Figuren 3 und 4 zeigen eine weitere Ausführungsform einer erfindungsgemäßen Fahrwerkskomponente 15. Bei der Fahrwerkskomponente 15 handelt es sich um einen Führungslenker. Auch die Fahrwerkskomponente 15 ist gebildet aus einem geschmiedeten Basiskörper 16 und einem Verstärkungskörper 17. Der Basiskörper 2 besteht aus einem Leichtmetallwerkstoff, insbesondere Aluminium bzw. einer Aluminiumlegierung. Der Verstärkungskörper 17 besteht aus einem Faserwerkstoff, vorzugsweise einem kohlenstofffaserverstärkten Kunststoff. Der Basiskörper 16 bildet eine Bauteilhälfte, der Verstärkungskörper 17 bildet die andere Bauteilhälfte.

Der Basiskörper 16 und der Verstärkungskörper 17 sind mittels einer Klebstoffschicht 18 kraftschlüssig miteinander verbunden, wobei die Klebstoffschicht 18 vollflächig zwischen Basiskörper 16 und Verstärkungskörper 17 vorgesehen ist. Randseitige Bereiche 19 in Form von Stegen 20 sowie zapfenartige Bereiche 21 in Form von Noppen 22 des Basiskörpers 16 sind plastisch verformt und umgreifen den Verstärkungskörper 17 partiell. Die zapfenartigen Bereiche 21 durchgreifen Ausnehmungen 23 im Verstärkungskörper 17, wobei die vorstehenden Enden 24 plastisch verformt sind und einen Schließkopf bilden. Die randseitigen Stege 20 sind durch eine plastische Verformung eingefalzt und umgreifen die Randbereiche 25 des Verstärkungskörpers 17.

In den Endabschnitten 26, 27 der Fahrwerkskomponente 15 weisen der Basiskörper 16 und der Verstärkungskörper 17 jeweils zueinander korrespondierende Öffnungen 28, 29 auf, welche Durchzüge für die Aufnahme von Gummilagern 30 bilden.

### Bezugszeichen:

1 - Fahrwerkskomponente
2 - Basiskörper
3 - Verstärkungskörper
4 - Schenkelabschnitt
5 - Klebstoffschicht
6 - Bereich
7 - Bereich
8 - Steg
9 - Rand v. 2
10 - Noppe
11 - Ausnehmung
12 - Aufnahmebereich
13 - Ende v. 10
14 - Rand v. 3
15 - Fahrwerkskomponente
16 - Basiskörper
17 - Verstärkungskörper
18 - Klebstoffschicht
19 - Bereich v. 16
20 - Steg
21 - Bereich v. 16
22 - Noppe
23 - Ausnehmung
24 - Ende v. 22
25 - Randbereich v. 17
26 - Endabschnitt v. 15
27 - Endabschnitt v. 15
28 - Öffnung
29 - Öffnung
30 - Gummilager

## Patentansprüche

1. Fahrwerkskomponente für ein Kraftfahrzeug, welche einen geschmiedeten Basiskörper (2; 16) aus einem Leichtmetallwerkstoff aufweist, der mit einem Verstärkungskörper (3; 17) aus einem Faserwerkstoff gefügt ist, wobei der Basiskörper (2; 16) und der Verstärkungskörper (3; 17) mittels einer Klebstoffschicht (5; 18) kraftschlüssig verbunden sind, **dadurch gekennzeichnet, dass** Bereiche (6, 7; 19, 21) des Basiskörpers (2; 16) plastisch verformt sind und den Verstärkungskörper (3; 17) partiell formschlüssig umgreifen.

2. Fahrwerkskomponente nach Anspruch 1, **dadurch gekennzeichnet, dass** die Klebstoffschicht (5; 18) vollflächig zwischen dem Basiskörper (2; 16) und dem Verstärkungskörper (3; 17) vorgesehen ist.

3. Fahrwerkskomponente nach Anspruch 1 oder 2, **dadurch gekennzeichnet, dass** der Verstärkungskörper (3; 17) aus einem kohlenstofffaserverstärktem Kunststoff (CFK) besteht.

4. Fahrwerkskomponente nach einem der Ansprüche 1 bis 4, **dadurch gekennzeichnet, dass** die Klebstoffschicht (5; 18) aus einem Klebstoff auf Epoxidharzbasis besteht.

5. Fahrwerkskomponente nach einem der Ansprüche 1 bis 4, **dadurch gekennzeichnet, dass** sich plastisch verformte Bereiche (6; 19) des Basiskörpers (2; 16) randseitig des Verstärkungskörpers (3; 17) erstrecken.

6. Fahrwerkskomponente nach einem der Ansprüche 1 bis 5, **dadurch gekennzeichnet, dass** sich Bereiche (7; 21) des Basiskörpers (2; 16) durch Ausnehmungen (11; 23) im Verstärkungskörper (3; 17) erstrecken und plastisch verformt sind.

7. Fahrwerkskomponente nach einem der Ansprüche 1 bis 6, **dadurch gekennzeichnet, dass** der Verstärkungskörper (3) in einem steifigkeitsrelevanten Abschnitt (4) des Basiskörpers (2) angeordnet ist.

8. Fahrwerkskomponente nach einem der Ansprüche 1 bis 7, **dadurch gekennzeichnet, dass** Verhältnis des Elastizitätsmoduls des Werkstoffs des Basiskörpers (2; 16) und dem Elastizitätsmodul des Werkstoffs des Verstärkungskörpers (3; 17) zwischen 1:3 und 1:7 bemessen ist.

9. Fahrwerkskomponente nach einem der Ansprüche 1 bis 8, **dadurch gekennzeichnet, dass** der Basiskörper (16) und der Verstärkungskörper (17) zueinander korrespondierende Öffnungen (28, 29) aufweisen.

## Claims

1. An undercarriage component for a motor vehicle, which comprises a forged basic member (2; 16) of a light metal material, which is joined to a reinforcing member (3; 17) of a fibrous material, the basic member (2; 16) and the reinforcing member (3; 17) being connected non-positively by means of an adhesive layer (5; 18), **characterised in that** regions (6, 7; 19, 21) of the basic member (2; 16) are plastically deformed and engage partially form-fittingly around the reinforcing member (3; 17).

2. An undercarriage component according to claim 1, **characterised in that** the adhesive layer (5; 18) is provided over the entire surface between the basic member (2; 16) and the reinforcing member (3; 17).

3. An undercarriage component according to claim 1 or claim 2, **characterised in that** the reinforcing member (3; 17) consists of carbon fibre reinforced plastics (CFRP).

4. An undercarriage component according to any one of claims 1 to 4, **characterised in that** the adhesive layer (5; 18) consists of an epoxy resin-based adhesive.

5. An undercarriage component according to any one of claims 1 to 4, **characterised in that** plastically deformed regions (6; 19) of the basic member (2; 16) extend at the edge of the reinforcing member (3; 17).

6. An undercarriage component according to any one of claims 1 to 5, **characterised in that** regions (7; 21) of the basic member (2; 16) extend through openings (11; 23) in the reinforcing member (3; 17) and are plastically deformed.

7. An undercarriage component according to any one of claims 1 to 6, **characterised in that** the reinforcing member (3) is arranged in a portion (4) of the basic member (2) of significance with regard to rigidity.

8. An undercarriage component according to any one of claims 1 to 7, **characterised in that** the ratio of the modulus of elasticity of the material of the basic member (2; 16) and the modulus of elasticity of the material of the reinforcing member (3; 17) is between 1 : 3 and 1 : 7.

9. An undercarriage component according to any one of claims 1 to 8, **characterised in that** the basic member (16) and the reinforcing member (17) comprise mutually corresponding orifices (28, 29).

## Revendications

1. Composant de châssispour un véhicule à moteur, qui comprend un corps de base (2 ; 16) forgé en métal léger, qui est muni d'un corps de renfort (3 ; 17) en matériau fibreux, le corps de base (2 ; 16) et le corps de renfort (3 ; 17) étant reliés à l'aide d'une couche de colle (5 ; 18) avec une transmission des forces, **caractérisé en ce que** des zones (6, 7 ; 19, 21) du corps de base (2 ; 16) sont déformées plastiquement et entourent partiellement le corps de renfort (3 ; 17) avec une complémentarité de forme.

2. Composant de châssis selon la revendication 1, **caractérisé en ce que** la couche de colle (5 ; 18) est appliquée sur toute la surface entre le corps de base (2 ; 16) et le corps de renfort (3 ; 17).

3. Composant de châssis selon la revendication 1 ou 2, **caractérisé en ce que** le corps de renfort (3 ; 17) est constitué d'une matière plastique renforcé de fibres de carbone (CFK).

4. Composant de châssis selon l'une des revendications 1 à 4, **caractérisé en ce que** la couche de colle (5 ; 18) est constituée d'une colle à base de résine époxy.

5. Composant de châssis selon l'une des revendications 1 à 4, **caractérisé en ce que** des zones (6 ; 19) déformées plastiquement du corps de base (2 ; 16) s'étendent sur le bord du corps de renfort (3 ; 17).

6. Composant de châssis selon l'une des revendications 1 à 5, **caractérisé en ce que** des zones (7 ; 21) du corps de base (2 ; 16) s'étendent à travers des évidements (11 ; 23) dans le corps de renfort (3 ; 17) et sont déformées plastiquement.

7. Composant de châssis selon l'une des revendications 1 à 6, **caractérisé en ce que** le corps de renfort (3) est disposé dans une section (4), important pour la rigidité, du corps de base (2).

8. Composant de châssis selon l'une des revendications 1 à 7, **caractérisé en ce que** le rapport entre le module d'élasticité du matériau du corps de base (2 ; 16) et le module d'élasticité du matériau du corps de renfort (3 ; 17) est entre 1:3 et 1:7.

9. Composant de châssis selon l'une des revendications 1 à 8, **caractérisé en ce que** le corps de base (16) et le corps de renfort (17) présentent des ouvertures (28, 29) correspondantes entre elles.
